# EUROPÄISCHE PATENTSCHRIFT

(11) **EP 0 445 072 B1**
(45) Veröffentlichungstag und Bekanntmachung des Hinweises auf die Patenterteilung: **27.03.1996**
(21) Anmeldenummer: 91810109.8
(22) Anmeldetag: 20.02.1991
(51) Int. Cl.: C09B 63/00, C09B 29/15, C09B 67/48

(54) **Herstellung metallisierter Azopigmente**
Preparation of metallised azo pigments
Préparation de pigments azoiques métallisés

(30) Priorität: 28.02.1990 GB 9004495
(43) Veröffentlichungstag der Anmeldung: 04.09.1991
(73) Patentinhaber: CIBA-GEIGY AG, CH-4002 Basel (CH)
(72) Erfinder: Mordente, Michael, Neilston, Glasgow, G78 3QT (GB); Boyd, Alistair Brodie, Oldhall, Paisley, PAI 3EU (GB)

(56) Entgegenhaltungen:
- EP-A- 0 272 697
- EP-A- 0 358 810
- AT-B- 132 023
- AT-B- 263 971
- CH-A- 635 607
- DE-A- 2 834 028

## Beschreibung

Die vorliegende Erfindung betrifft die Herstellung metallisierter Azopigmente mit einer neuen Kristallstruktur, die sich durch erhöhte Wasserbeständigkeit und blaueren Farbton auszeichnen.

Metallisierte Azopigmente, insbesondere jene der Formel 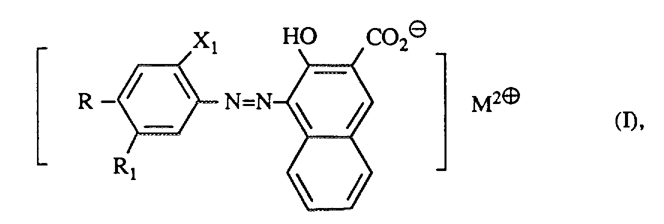 worin R und R₁ unabhängig voneinander Wasserstoff, Halogen oder Alkyl, X₁ SO₃ ^{⊖} oder CO₂ ^{⊖} und M Ca, Sr, Mn oder Ba bedeuten finden breite Verwendung in Druckfarben, Anstrichstoffen und Kunststoffen.

Solche Pigmente werden üblicherweise durch Kupplung eines diazotierten aromatischen Amins der Formel 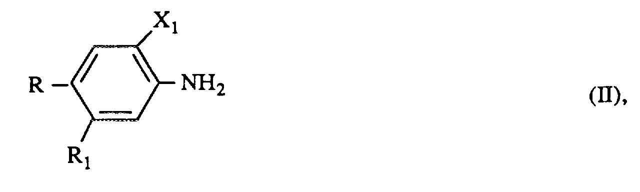 worin R, R₁ und X₁ die oben angegebene Bedeutung haben, mit einer Kupplungskomponente der Formel 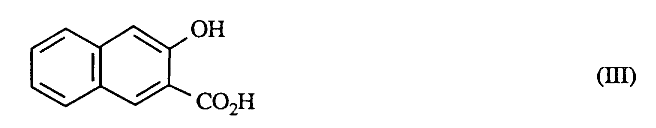 hergestellt Die Kupplungsreaktion wird in Gegenwart eines Metalls M oder einer Mischung von Metallen M,wobei M die oben angegebene Bedeutung hat, in alkalischem Medium durchgeführt.

Gemäss DE-A 28 34 028 werden Calciumfarblacke aus Salzen der Formel I, worin M z.B. Natrium, Kalium oder Ammonium bedeutet und die durch Kupplung im alkalischen Medium erhalten werden, durch Umsetzung mit einem löslichen Calciumsalz hergestellt.

In einer Alternativmethode wird das Azopigment nach der Kupplung mit einem Metall M oder einer Mischung von Metallen M in alkalischem Medium behandelt, wie z.B. in US-PS 2 225 665 und US-PS 2 744 027 beschrieben.

Calciumsalze der Formel I haben, insbesondere ihrer guten Farbstabilität wegen, breite Verwendung in verschiedenen Substraten gefunden. Bei Verwendung in wässrigen Tinten zeigen sie hingegen eine unerwünschte Farbtonverschiebung von Blaurot zu Gelbrot.

Die wässrigen Tinten haben bis vor kurzem auf dem Druckfarbenmarkt eine eher bescheidene Rolle gespielt. Deshalb ist bisher zur Lösung des obenerwähnten Problems wenig unternommen worden.

Im Zuge der Entwicklung umweltfreundlicherer Systeme besteht nun die Tendenz Druckfarben auf Basis von organischen Lösungsmitteln durch wässrige Druckfarben zu ersetzen. Die Lösung des obenerwähnten Problems ist demnach von grösster Bedeutung für den Einsatz von Calciumsalzen der Formel I in zeitgemässen Druckfarbensysteme.

In GB-A 1 562 064 wird vorgeschlagen Calcium/Strontium-Mischsalze der Formel I zu verwenden. Diese Mischsalze zeigen in wässrigen Tinten tatsächlich eine bessere Farbbeständigkeit, andererseits aber auch eine Verschiebung vom erwünschten Farbton des reinen Calciumsalzes.

Es ist nun gefunden worden, dass bei Durchführung der Kupplung einer diazotierten Verbindug der Formel II mit der Kupplungskomponente III in saurem Medium überraschenderweise metallisierte Azopigmente mit einer neuen Kristallmodifikation entstehen, die sich durch hohe Wasserbeständigkeit und reinen blauen Farbton auszeichnen.

Demnach betrifft die vorliegende Erfindung ein Verfahren zur Herstellung eines metallisierten Azopigments der Formel 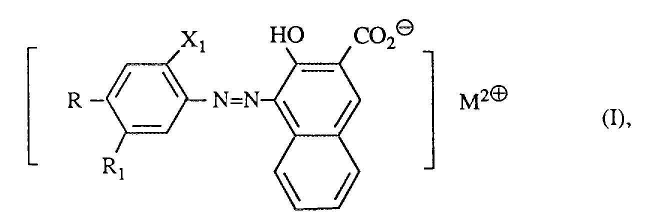 worin R und R₁ unabhängig voneinander Wasserstoff, Halogen oder Alkyl, X₁ SO₃ ^{⊖} oder CO₂ ^{⊖} und M Ca, Sr, Mn oder Ba bedeuten, durch Kupplung eines diazotierten Amins der Formel 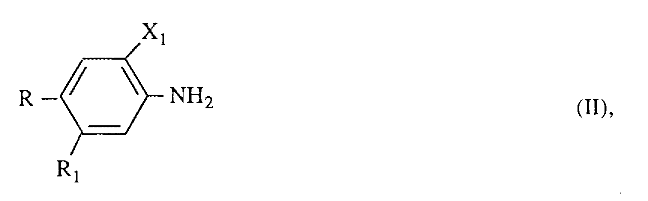 worin R, R₁ und X₁ die oben angegebene Bedeutung haben, mit einer Kupplungskomponente der Formel 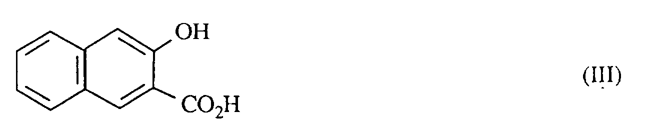 bei einem pH unter 7,0 zu einem Azofarbstoff der Formel 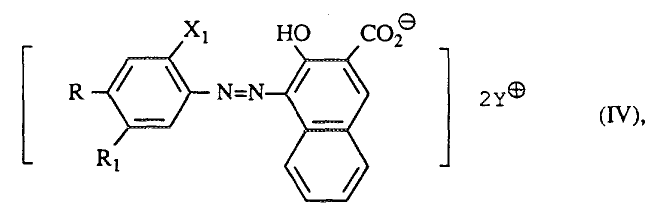 worin R, R₁ und X₁ die oben angegebene Bedeutung haben und Y ein Alkalimetall oder Ammonium bedeutet
und Verlacken des Farbstoffs der Formel IV während oder nach seiner Herstellung mit einem oder verschiedenen Salzen eines Metalls M, wobei M die oben angegebene Bedeutung hat.

Bedeuten R und R₁ Alkyl, so handelt es sich vorzugsweise um C₁-C₄-Alkyl, insbesondere um Methyl. R und R₁ bedeuten als Halogen insbesondere Chlor.

Bevorzugt ist das Pigment der Formel I, worin R Methyl, R₁ Wasserstoff, X₁ SO₃ ^{⊖} und M Ca bedeuten. Es ist bekannt unter dem Namen Calcium 4B Toner (Pigment Rot 57.1).

Der Verlackungsprozess kann entweder durch nachträgliche Verlackung des erfindungsgemäss hergestellten Farbstoffs der Formel IV, durch Verwendung eines Salzes eines oder verschiedener Metalle M oder bevorzugt durch Vermischen eines Salzes des Metalls M mit dem diazotierten Amin der Formel II vor der Kupplung durchgeführt werden.

Beim Salz des Metalls M kann es sich um ein von irgendeinem wasserlöslichen Anion deriviertes, unter den Bedingungen der Kupplungsreaktion inertes, bevorzugt anorganisches Salz handeln, insbesondere aber um ein Chlorid und/oder ein Nitrat.

Das Salz des Metalls M wird zweckmässig in einer Menge von 0,75 bis 1,75, bevorzugt 1,0 bis 1,5 Mol, als Metallsalz gerechnet, pro Mol des Azofarbstoffs der Formel IV, eingesetzt.

Die Bildung des Diazoniumsalzes des Amins der Formel II erfolgt nach üblichen Methoden, z.B. durch Auflösen des Amins in Wasser zusammen mit einem alkalischen Mittel, wie beispielsweise einem Alkalimetallhydroxid, insbesondere Natrium- oder Kaliumhydroxid und bevorzugt mit wässrigem Ammoniak, Zugabe eines Molequivalents Natriumnitrit bei einer Temperatur unter 10°C und danach einer Säure, wie beispielsweise Salz- oder Essigsäure, um die Reaktionsmischung anzusäuren und die Diazotierung zu vollenden.

Die Kupplungskomponente kann zusammen mit einem alkalischen Mittel, wie Alkalimetallhydroxid, z.B. Natrium- oder Kaliumhydroxid, oder bevorzugt mit wässrigem Ammoniak, in Wasser aufgelöst werden.

Wesentlicher Umstand ist, dass die Kupplungsreaktion bei einem pH unter 7,0 durchgeführt wird. Dies wird zweckmässig dadurch bewerkstelligt, dass vor der Kupplung der pH der Diazoniumsalzlösung auf einen Wert zwischen 3,0 und 7,0 erhöht und der pH der Kupplungskomponentenlösung auf einen Wert zwischen 5 und 12, bevorzugt zwischen 6 und 8 erniedrigt werden. Die Kupplungsreaktion wird dann durch Vermischen der beiden Lösungen durchgeführt, bevorzugt durch allmähliche Zugabe der Kupplungskomponentenlösung zur Diazoniumsalzlösung bei einem pH zwischen 3,0 und 6,9, vorzugsweise aber bei einem pH zwischen 4,5 und 5,5.

Die erfindungsgemäss erhaltenen metallisierten Azopigmente besitzen eine neue Kristallmodifikation und eine verbesserte Wasserbeständigkeit im Vergleich zu nach üblicher alkalischer Kupplung hergestellten metallisierten Azopigmenten.

Das übliche alkalische Kupplungsverfahren zur Herstellung von Pigment Rot 57.1 liefert, nach Trocknung unter 70°C, ein Produkt enthaltend 3 Mol Kristallwasser pro Mol Pigment, wovon etwa 2 Mol nach weiterer Trocknung (Rösten bei 90°C) reversibel labil sind, wie in American Ink Maker (Dezember 1986), S. 30-33, beschrieben.

Dieser reversibel labile Wassergehalt wird für die Unbeständigkeit von Pigment Rot 57.1 in wässrigen Druckfarbensystemen verantwortlich gemacht (The Manufacture of Lakes and Precipitated Pigments - A.W.C. Harrison, S. 213).

Die nach dem erfindungsgemässen Verfahren hergestellten Produkte enthalten nur etwa 1,5 Mol nicht labiles Kristallwasser pro Mol Pigment, wie durch Karl Fischer-Analyse bestimmt. Dadurch unterscheiden sie sich deutlich von den herkömmlich hergestellten Produkten. Ein weiteres Unterscheidungsmerkmal sind die Röntgenbeugungsspektren, in welchen der charakteristische Doppelpeak bei Netzebenenabständen (relative Intensität) 3,80 (100) und 3,91 (100) des nach dem herkömmlichen Verfahren hergestellten Produkts durch Intensivierung des Peaks bei 3,80 (Intensität 150) im erfindungsgemässen Produkt annähernd zu einem Einzelpeak wird. Zudem ist die Einzellinie bei Netzebenenabstand 6,32 des herkömmlichen Produkts im erfindungsgemässen Produkt in mehrere Linien aufgespalten, während bei Netzebenenabstand 6,55 eine zusätziche Linie erscheint. Die Netzebenenabstände (d-Werte in Angströms) sind von entsprechenden Linien in DEBYESCHERRER-Diagramme (Wellenlänge 1,54050 Angströms, Cu-K-alpha-1-Strahlung) berechnet.

Die nach dem erfindungsgemässen Verfahren hergestellten Pigmente eignen sich zum Pigmentieren von hochmolekularem organischem Material, wie z.B. Kunststoffe, Anstrichstoffe und Druckfarben. Bevorzugt werden sie in Druckfarben, insbesondere in wässrigen Druckfarben, eingesetzt.

Obwohl die nach dem erfindungsgemässen Verfahren hergestellten Pigmente bereits ausgezeichnete Eigenschaften aufweisen, können sie auch vorteilhaft als Zusammensetzungen enthaltend bekannte Additive, die zur Verbesserung der Eigenschaften des zu pigmentierenden Substrats dienen (z.B. Druckfarben, Anstrichstoffe und Kunststoffe). Bei den Additiven kann es sich um Polymere handeln, wie Polyacrylsäuren, Polyurethane, Polymaleinsäuren, Polyethylenwachse, natüriche Harze wie z.B. Kolophoniumharze oder Abietinsäurederivate.

Additive dieser Art können in Mengen von 0,05 bis 30, bevorzugt 1 bis 10 Gew.%, bezogen auf das Pigment, vor, nach oder bevorzugt während des Kupplungsprozesses eingearbeitet werden.

Die folgenden Beispiele erläutern die Erfindung.

Beispiel 1: 40 g 2-Amino-5-methyl-benzolsulfonsäure werden in 400 g Wasser enthaltend 26,4 g konzentriertes Ammoniak (33 %) gelöst. Nach dem Abkühlen mit Eis auf 0°C werden nacheinander 14,8 g Natriumnitrit (in 50 g Wasser gelöst) und 65 g konzentrierte Salzsäure zur Bildung der Diazoniumsalzsuspension zugegeben. Danach werden 35 g Calciumchlorid (in 100 g Wasser gelöst) zugegeben. Der pH dieser Suspension wird dann durch Zugabe von konzentriertem Ammoniak auf 5,0 eingestellt.

In einem separaten Behälter werden 42 g 3-Hydroxy-2-naphthoesäure in 26,4 g konzentriertes Ammoniak enthaltendem Wasser gelöst. Der pH dieser Lösung wird dann durch Zugabe von Essigsäure auf 7,0 eingestellt.

Die so erhaltene Kupplungskomponentenlösung wird innert etwa 40 Minuten in die Diazoniumsalzsuspension zugetropft, wobei der pH durch Zugabe von Säure oder Alkali jeweils auf 5,0 gehalten wird.

Die erhaltene Aufschlämmung wird eine Stunde gerührt und dann zum Sieden erhitzt. Das bläulich-rote metallisierte Azopigment wird durch Filtration isoliert, salzfrei gewaschen und bei 60°C getrocknet.

Beispiel 2: 52,5 g 2-Amino-4-chlor-5-methyl-benzolsulfonsäure werden in 400 g Wasser enthaltend 15 g konzentriertes Ammoniak (33 %) gelöst. Nach dem Abkühlen mit Eis auf 0°C werden nacheinander 16,6 g Natriumnitrit (in 50 g Wasser gelöst) und 63,5 g konzentrierte Salzsäure zur Bildung der Diazoniumsalzsuspension zugegeben. Danach werden 43,8 g Calciumchlorid (in 100 g Wasser gelöst) zugegeben. Der pH dieser Suspension wird dann durch Zugabe von konzentriertem Ammoniak auf 5,0 eingestellt.

In einem separaten Behälter werden 44,6 g 3-Hydroxy-2-naphthoesäure in 455 g heissem Wasser enthaltend 36,5 g konzentriertes Ammoniak gelöst. Der pH dieser Lösung wird dann durch Zugabe von Essigsäure auf 7,0 eingestellt

Die so erhaltene Kupplungskomponentenlösung wird innert etwa 40 Minuten in die Diazoniumsalzsuspension zugetropft, wobei der pH durch Zugabe von Säure oder Alkali jeweils auf 5,0 gehalten wird.

Die erhaltene Aufschlämmung wird eine Stunde gerührt und dann zum Sieden erhitzt. Das bläulich-rote metallisierte Azopigment wird durch Filtration isoliert, salzfrei gewaschen und bei 60°C getrocknet.

Beispiel 3: 52,5 g 2-Amino-5-chlor-4-methyl-benzolsulfonsäure werden in 320 g Wasser enthaltend 12,4 g konzentriertes Ammoniak (33 %) gelöst. Nach dem Abkühlen mit Eis auf 0°C werden nacheinander 16,7 g Natriumnitrit (in 50 g Wasser gelöst) und 55,2 g konzentrierte Salzsäure zur Bildung der Diazoniumsalzsuspension zugegeben. Danach werden 43,8 g Calciumchlorid (in 100 g Wasser gelöst) zugegeben. Der pH dieser Suspension wird dann durch Zugabe von konzentriertem Ammoniak auf 5,0 eingestellt.

In einem separaten Behälter werden 44,6 g 3-Hydroxy-2-naphthoesäure in 455 g heissem Wasser enthaltend 36,5 g konzentriertes Ammoniak gelöst. Der pH dieser Lösung wird dann durch Zugabe von Essigsäure auf 7,0 eingestellt

Die so erhaltene Kupplungskomponentenlösung wird innert etwa 40 Minuten in die Diazoniumsalzsuspension zugetropft, wobei der pH durch Zugabe von Säure oder Alkali jeweils auf 5,0 gehalten wird.

Die erhaltene Aufschlämmung wird eine Stunde gerührt und dann zum Sieden erhitzt. Das bläulich-rote metallisierte Azopigment wird durch Filtration isoliert, salzfrei gewaschen und bei 60°C getrocknet.

Beispiel 4: 40 g 2-Amino-5-methyl-benzolsulfonsäure werden in 400 g Wasser enthaltend 26,4 g konzentriertes Ammoniak (33 %) gelöst. Nach dem Abkühlen mit Eis auf 0°C werden nacheinander 14,8 g Natriumnitrit (in 50 g Wasser gelöst) und 65 g konzentrierte Salzsäure zur Bildung der Diazoniumsalzsuspension zugegeben. Danach werden 25 g Calciumchlorid (in 100 g Wasser gelöst) zugegeben. Der pH dieser Suspension wird dann durch Zugabe von konzentriertem Ammoniak auf 5,0 eingestellt.

In einem separaten Behälter werden 42 g 3-Hydroxy-2-naphthoesäure in 26,4 g konzentriertes Ammoniak enthaltendem warmem Wasser gelöst. Der pH dieser Lösung wird dann durch Zugabe von Essigsäure auf 7,0 eingestellt.

Die so erhaltene Kupplungskomponentenlösung wird innert etwa 40 Minuten in die Diazoniumsalzsuspension zugetropft, wobei der pH durch Zugabe von Säure oder Alkali jeweils auf 5,0 gehalten wird.

Die erhaltene Aufschlämmung wird eine Stunde gerührt, bevor der pH zur Beendigung der Reaktion auf 9,0 erhöht wird. Danach werden 12 g Strontiumnitrat zugegeben und die Reaktionsmischung wird eine weitere Stunde gerührt. Bevor 15 Minuten auf 90°C erhitzt und der pH auf 5,0 eingestellt wird, werden noch 26 g eines Acrylharzes mit 40 % Festtoffgehalt zugegeben.

Das erhaltene bläulich-rote metallisierte Azopigment wird durch Filtration isoliert, salzfrei gewaschen und bei 60°C getrocknet.

Beispiel 5: 40 g 2-Amino-5-methyl-benzolsulfonsäure werden in 400 g Wasser enthaltend 26,4 g konzentriertes Ammoniak (33 %) gelöst. Nach dem Abkühlen mit Eis auf 0°C werden nacheinander 14,8 g Natriumnitrit (in 50 g Wasser gelöst) und 65 g konzentrierte Salzsäure zur Bildung der Diazoniumsalzsuspension zugegeben. Danach werden 35 g Calciumchlorid (in 100 g Wasser gelöst) zugegeben. Der pH dieser Suspension wird dann durch Zugabe von konzentriertem Ammoniak auf 5,0 eingestellt.

In einem separaten Behälter werden 42 g 3-Hydroxy-2-naphthoesäure in 455 g warmem Wasser enthaltend 26,4 g Ammoniak gelöst. Dieser Lösung werden 25 g Kolophonium-Natriumsalz zugegeben und der pH auf 8,0 eingestellt.

Die so erhaltene Kupplungskomponentenlösung wird innert etwa 40 Minuten in die Diazoniumsalzsuspension zugetropft, wobei der pH durch Zugabe von Säure oder Alkali jeweils auf 5,0 gehalten wird.

Die erhaltene Aufschlämmung wird eine Stunde gerührt und dann zum Sieden erhitzt. Das bläulich-rote metallisierte Azopigment wird durch Filtration isoliert, salzfrei gewaschen und bei 60°C getrocknet.

Beispiele 6-10: Die Beispiele 1-5 werden wiederholt mit der einzigen Ausnahme, dass anstelle von Calciumchlorid Strontiumnitrat zur Diazoniumsalzsuspension zugegeben wird.

### Vergleichsbeispiele 1 bis 5

Vergleichsbeispiel 1: 40 g 2-Amino-5-methyl-benzolsulfonsäure werden in 400 g Wasser enthaltend 26,4 g konzentriertes Ammoniak (33 %) gelöst. Nach dem Abkühlen mit Eis auf 0°C werden nacheinander 14,8 g Natriumnitrit (in 50 g Wasser gelöst) und 65 g konzentrierte Salzsäure zur Bildung der Diazoniumsalzsuspension zugegeben. Danach werden 35 g Calciumchlorid (in 100 g Wasser gelöst) zugegeben.

In einem separaten Behälter werden 42 g 3-Hydroxy-2-naphthoesäure in 26,4 g konzentriertes Ammoniak enthaltendem Wasser gelöst. Die Diazoniumsalzsuspension wird dann innert 40 Minuten der Kupplungskomponentenlösung zugetropft, wobei der pH zwischen 10 und 11 gehalten wird. Die erhaltene Aufschlämmung wird eine Stunde gerührt und zum Sieden erhitzt. Das erhaltene bläulich-rote metallisierte Azopigment wird durch Filtration isoliert, salzfrei gewaschen und bei 60°C getrocknet.

Die Vergleichsbeispiele 2-5 bestehen in der Wiederholung von Vergleichsbeispiel 1, wobei aber die gleichen Ausgangsprodukte wie jeweils in den Beispielen 2-5 eingesetzt werden. In jedem Fall erhält man ein bläulich-rotes metallisiertes Azopigment.

### Auswertung der Pigmente

Der Prozentgehalt an Kristallwasser in den entsprechenden Beispielen und Vergleichsbeispielen 1-5 ergibt sich nach Karl-Fischer-Titration wie folgt:

| | |
|---|---|
| Bespiel 1 | Vergleichsbeispiel 1 |
| 5,6% (ca. 1,5 Mol) | 12% (ca. 3 Mol) |
| Beispiel 2 | Vergleichsbeispiel 2 |
| 4,9% | 11,5% |
| Beispiel 3 | Vergleichsbeispiel 3 |
| 5,3% | 12,1% |
| Beispiel 4 | Vergleichsbeispiel 4 |
| 5,2% | 11,8% |
| Beispiel 5 | Vergleichsbeispiel 5 |
| 5,7% | 12,0% |

Die erhaltenen Pigmente werden zu wässrigen Druckfarben verarbeitet, durch Einarbeiten von 20 g Pigment in einem wässrigen Bindemittelsystem bestehend aus
- 39 g: ®Joncryl 61 (Acrylharz),
- 35 g: Wasser,
- 5 g: Isopropanol,
- 1 g: Tributylphosphat (Antischaummittel).

Jede Druckfarbenformulierung zeigt demnach eine Pigmentvolumenkonzentration von 20 % bei einem Bindemittel: Pigment-Verhältnis von 1:2. Die jeweiligen Formulierungen werden 15 Minuten in einem Hochgeschwindigkeitsmischer vorvermischt und dann 10 Minuten in einer Kugelmühle unter Verwendung von Glasperlen (Ø 0,7-1,0 mm) gemahlen. Die so hergestellten Druckfarbenanreibungen werden, durch Zugabe einer Abzugszusammensetzung aus 15 g ®Joncryl 8050 (Acrylharz) und 9 g Wasser, mit einer Pigmentvolumenkonzentration von 10 % abgezogen.

Die jeweiligen Abzüge werden 7 Tage bei 20-30°C gealtert. Die allfällige Wirkung der Rehydratisierung wird durch Vergleich der gealterten mit frischen Abzügen bestimmt.

Bei den mit Pigmenten der Beispiele 1-5 hergestellten Abzügen ist praktisch keine Farbtonänderung oder Vergilbung sichtbar, während bei den mit Pigmenten der Vergleichsbeispiele 1-5 hergestellten Abzügen eine deutliche Farbtonverschiebung nach gelbrot, die auf Rehydratisierung zurückzuführen ist, festgestellt wird.

## Patentansprüche

1. Verfahren zur Herstellung eines metallisierten Azopigments der Formel 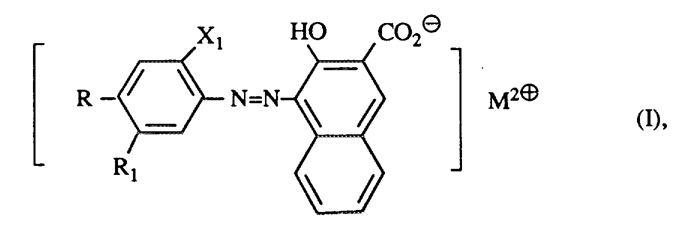 worin R und R₁ unabhängig voneinander Wasserstoff, Halogen oder Alkyl, X₁ SO₃ ^{⊖} oder CO₂ ^{⊖} und M Ca, Sr, Mn oder Ba bedeuten, durch Kupplung eines diazotierten Amins der Formel 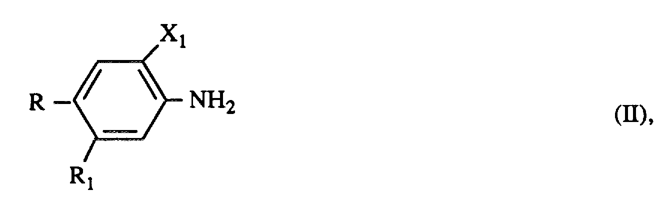 worin R, R₁ und X₁ die oben angegebene Bedeutung haben, mit einer Kupplungskomponente der Formel 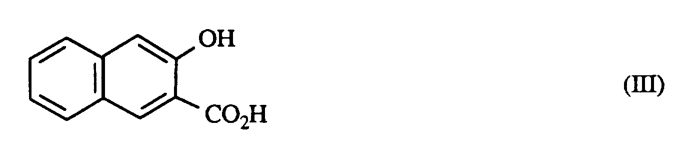 bei einem pH unter 7,0 zu einem Azofarbstoff der Formel 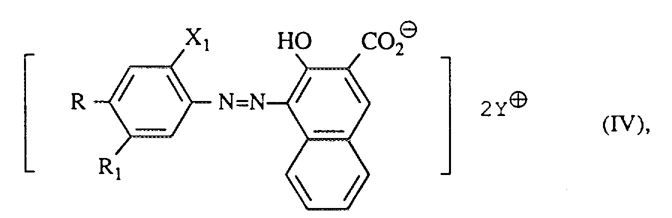
worin R, R₁ und X₁ die oben angegebene Bedeutung haben und Y ein Alkalimetall oder Ammonium bedeutet
und Verlacken des Farbstoffs der Formel IV während oder nach seiner Herstellung mit einem oder verschiedenen Salzen eines Metalls M, wobei M die oben angegebene Bedeutung hat.

2. Verfahren gemäss Anspruch 1, zur Herstellung eines metallisierten Azopigments der Formel I, worin R Methyl, R₁ Wasserstoff, X₁ SO₃ ^{⊖} und M Ca bedeuten.

3. Verfahren gemäss Anspruch 1, dadurch gekennzeichnet, dass ein Salz eines oder verschiedener Metalle M, wobei M die in Anspruch 1 angegebene Bedeutung hat, mit dem diazotierten Amin der Formel II vor der Kupplung vermischt wird.

4. Verfahren gemäss Anspruch 1, dadurch gekennzeichnet, dass das Salz des Metalls M ein wasserlösliches anorganisches Salz ist.

5. Verfahren gemäss Anspruch 4, dadurch gekennzeichnet, dass das Salz ein Chlorid oder ein Nitrat des Metalls M ist.

6. Verfahren gemäss Anspruch 1, dadurch gekennzeichnet, dass zur Verlackung 0,75 bis 1,75 Mol Metallsalz auf 1 Mol des Farbstoffs der Formel IV eingesetzt werden.

7. Verfahren gemäss Anspruch 6, dadurch gekennzeichnet, dass 1,0 bis 1,5 Mol Metallsalz auf 1 Mol des Farbstoffs der Formel IV eingesetzt werden.

8. Verfahren gemäss Anspruch 1, dadurch gekennzeichnet, dass vor der Kupplung der pH der Diazoniumsalzlösung auf einen Wert zwischen 3,0 und 7,0 erhöht und der pH der Kupplungskomponentenlösung auf einen Wert zwischen 5 und 12 erniedrigt werden und danach die Kupplungsreaktion durch allmähliche Zugabe der Kupplungskomponentenlösung zur Diazoniumsalzlösung bei einem pH zwischen 3,0 und 6,9 durchgeführt wird.

9. Verfahren gemäss Anspruch 8, dadurch gekennzeichnet, dass der pH der Kupplungskomponentenlösung vor der Kupplung auf einen Wert zwischen 6 und 8 erniedrigt wird.

10. Verfahren gemäss Anspruch 8, dadurch gekennzeichnet, dass die Kupplungsreaktion bei einem pH zwischen 4,5 und 5,5 durchgeführt wird.

11. Verfahren gemäss Anspruch 1, dadurch gekennzeichnet, dass zusätzlich Additive, die zur Verbesserung der Eigenschaften des zu pigmentierenden Substrats dienen, zugegeben werden.

12. Verfahren gemäss Anspruch 11, dadurch gekennzeichnet, dass die Additive Polymere aus der Gruppe bestehend aus Polyacrylsäuren, Polyurethanen, Polymaleinsäuren, Polyethylenwachsen und natürlichen Wachsen sind.

13. Verfahren gemäss Anspruch 11, dadurch gekennzeichnet, dass die Additive in einer Menge zwischen 1 und 10 Gew.%, bezogen auf das Pigment, zugegeben werden.

14. Metallisiertes Azopigment der Formel I mit der in Anspruch 1 angegebenen Bedeutung mit einem Gehalt an nicht labilem Kristallwasser zwischen 4,9 und 5,7 % bestimmt nach der Karl Fischer-Analyse.

15. Hochmolekulares organisches Material enthaltend ein metallisiertes Azopigment gemäss Anspruch 14.

## Claims

1. A process for the production of a metallized azo pigment of formula 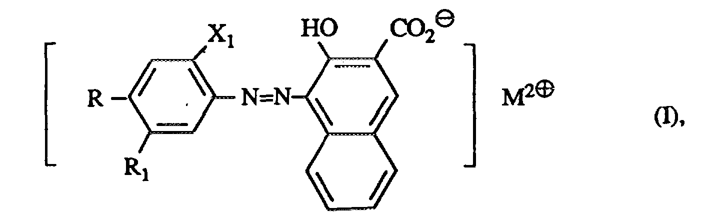 in which R and R₁, independently, are hydrogen, halogen or alkyl, X₁ is SO₃ ^{⊖} or CO₂ ^{⊖} and M is Ca, Sr, Mn or Ba, by coupling, at a pH below 7.0, a diazotized amine of formula 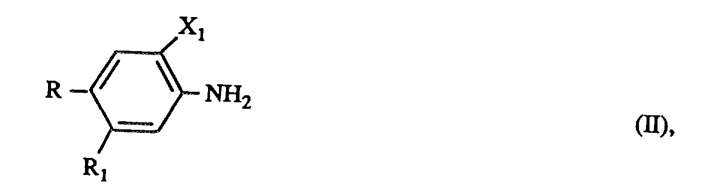 in which R, R₁ and X₁ are as defined above, with a coupling component of formula 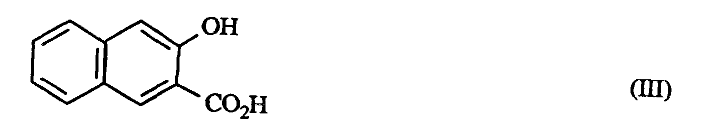 to produce an azo dye of formula 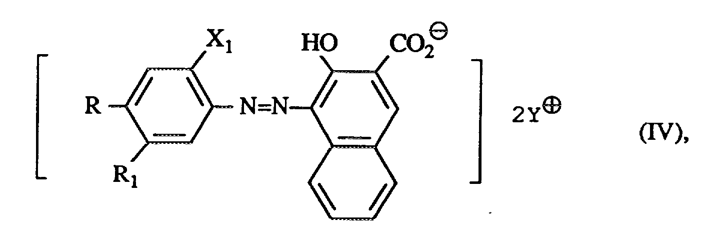 in which R, R₁ and X₁ are as defined above and Y is an alkali metal or ammonium, and laking the dye of formula IV during or after its production with one or more salts of a metal M, where M is as defined above.

2. A process according to claim 1 for the production of a metallized azo pigment of formula I wherein R is methyl, R₁ is hydrogen, X₁ is SO₃ ^{⊖} and M is Ca.

3. A process according to claim 1, wherein a salt of one or more metals M, wherein M is as defined in claim 1, is mixed with the diazotized amine of formula II, prior to the coupling.

4. A process according to claim 1, wherein the salt of the metal M is a water-soluble inorganic salt.

5. A process according to claim 4, wherein the salt is a chloride or a nitrate of the metal M.

6. A process according to claim 1, wherein for laking from 0.75 to 1.75 mol of metal salt are used per mole of the dye of formula IV.

7. A process according to claim 6, wherein from 1.0 to 1.5 mol of metal salt are used per mole of the dye of formula IV.

8. A process according to claim 1, wherein, prior to the coupling, the pH of the diazonium salt solution is elevated to a value between 3.0 and 7.0 and the pH of the coupling component solution is lowered to a value between 5 and 12, and the coupling reaction is then carried out by gradually adding the coupling component solution to the diazonium salt solution at a pH between 3.0 and 6.9.

9. A process according to claim 8, wherein the pH of the coupling component solution is lowered to a value between 6 and 8 prior to the coupling.

10. A process according to claim 8, wherein the coupling reaction is conducted at a pH between 4.5 and 5.5.

11. A process according to claim 1, wherein additives which serve to improve the properties of the substrate to be pigmented are added in addition.

12. A process according to claim 11, wherein the additives are polymers from the group consisting of polyacrylic acids, polyurethanes, polymaleic acids, polyethylene waxes and natural waxes.

13. A process according to claim 11, wherein the amount of additive added is between 1 and 10% by weight, relative to the pigment.

14. A metallized azo pigment of formula I as defined in claim 1 having a content of non-labile water of crystallization of between 4.9 and 5.7%, as determined by Karl Fischer analysis.

15. A high molecular weight organic material comprising a metallized azo pigment according to claim 14.

## Revendications

1. Procédés pour la préparation d'un pigment azoïque métallisé de formule 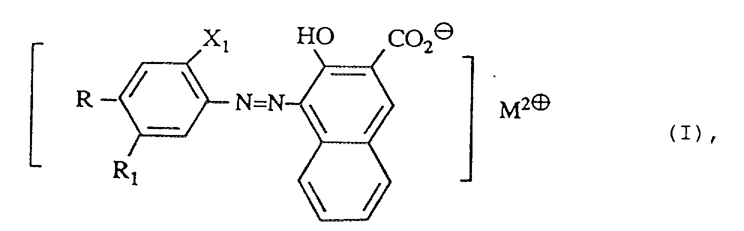 dans laquelle R et R₁, indépendamment l'un de l'autre, représentent l'hydrogène, halogène ou alkyle, X₁SO₃ ^{Θ} ou CO₂ ^{Θ} et M représente Ca, Sr, Mn ou Ba, par copulation d'une amine diazotée de formule 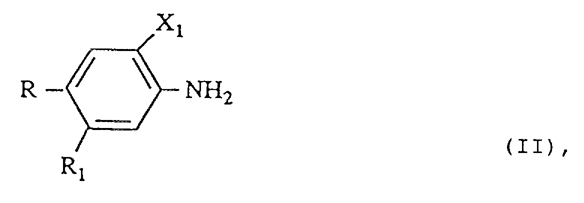 dans laquelle R, R₁ et X₁ ont les significations données ci-dessus avec un élément de copulation de formule 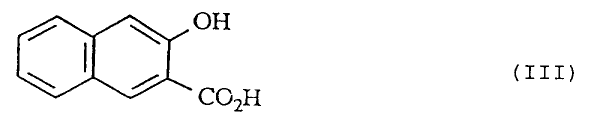 à un pH inférieur à 7,0 pour obtenir un colorant azoïque de formule 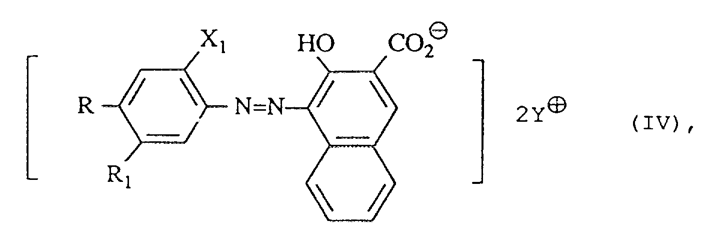 dans laquelle R, R₁ et X₁ ont la signification donnée ci-dessus et Y représente un métal alcalin ou ammonium et la formation du pigment du colorant de formule IV pendant ou après sa préparation avec un ou plusieurs sels d'un métal M, M ayant la signification donnée ci-dessus.

2. Procédés selon la revendication 1 pour la préparation d'un pigment azoïque métallisé de formule I, où R représente méthyle, R₁ représente l'hydrogène, X₁SO₃ ^{Θ} et M représentent Ca.

3. Procédés selon la revendication 1, caractérisé en ce qu'on mélange un sel d'un ou de différents métaux M, M ayant la signification donnée à la revendication 1, avec l'amine diazotée de formule II avant la copulation.

4. Procédé selon la revendication 1, caractérisé en ce que le sel du métal M est un sel minéral soluble dans l'eau.

5. Procédés selon la revendication 4, caractérisé en ce que le sel est un chlorure ou un nitrate du métal M.

6. Procédés selon la revendication 1, caractérisé en ce que pour la formation du pigment, on utilise 0,75 à 1,75 mole de sel métallique pour 1 mole de colorant de formule IV.

7. Procédés selon la revendication 6, caractérisé en ce qu'on utilise 1,0 à 1,5 mole de sel métallique pour 1 mole de colorant de formule IV.

8. Procédés selon la revendication 1, caractérisé en ce qu'avant la copulation on augmente le pH de la solution du sel de diazonium à une valeur comprise entre 3,0 et 7,0 et on réduit le pH de la solution de l'élément de copulation à une valeur comprise entre 5 et 12 et ensuite on met en oeuvre la réaction de copulation par addition progressive de la solution de l'élément de copulation à la solution du sel de diazonium à un pH compris entre 3,0 et 6,9.

9. Procédés selon la revendication 8, caractérisé en ce qu'on réduit le pH de la solution de l'élément de copulation avant la copulation à une valeur comprise entre 6 et 8.

10. Procédés selon la revendication 8, caractérisé en ce qu'on met en oeuvre la réaction de copulation à un pH compris entre 4,5 et 5,5.

11. Procédés selon la revendication 1, caractérisé en ce qu'on ajoute de plus des additifs qui servent à améliorer les caractéristiques du substrat pigmenté.

12. Procédés selon la revendication 11, caractérisé en ce que ces additifs polymères sont pris dans le groupe comportant les acides polyacryliques, les polyuréthannes, les acides polymaléiques, les cires de polyéthylène et les cires naturelles.

13. Procédés selon la revendication 11, caractérisé en ce qu'on ajoute les additifs en une quantité comprise entre 1 à 10 % en poids par rapport au pigment.

14. Pigment azoïque métallisé de formule I ayant la signification donnée dans la revendication 1, avec une teneur en eau de cristallisation non labile comprise entre 4,9 et 5,7 %, déterminée à l'aide de l'analyse de Karl Fischer.

15. Matière organique de haut poids moléculaire contenant un pigment azoïque métallisé selon la revendication 14.
